Europäisches Patentamt

European Patent Office

Office européen des brevets

(19)

(11) **EP 0 713 017 A2**

(12) **EUROPÄISCHE PATENTANMELDUNG**

(43) Veröffentlichungstag:
22.05.1996 Patentblatt 1996/21

(51) Int. Cl.$^6$: **F16B 25/00**, F16B 33/02

(21) Anmeldenummer: 95117144.6

(22) Anmeldetag: 31.10.1995

(84) Benannte Vertragsstaaten:
DE FR IT

(30) Priorität: 04.11.1994 DE 4439535

(71) Anmelder: **Berner GmbH**
D-74653 Künzelsau (DE)

(72) Erfinder: **Hölterhoff, Karl-Friedrich**
D 42699 Solingen (DE)

(74) Vertreter: **Bunke, Holger, Dr.rer.nat. Dipl.-Chem.**
**Prinz & Partner**
**Manzingerweg 7**
**D-81241 München (DE)**

(54) **Selbstschneidende Schraube**

(57) Eine selbstschneidende Schraube (10) mit einem Schraubenkopf (1) mit Antriebseinrichtung (2), einem im wesentlichen zylindrischen Schraubenschaft (3), auf dem aus Gewindegängen (5) ein eingängiges Gewinde gebildet ist, sowie einer Schraubenspitze (4) ist dadurch gekennzeichnet, daß die Gewindegänge (5) mindestens im Bereich des Schaftes (3) ein Doppelwinkelprofil aufweisen.

Fig. 1

EP 0 713 017 A2

## Beschreibung

Die Erfindung betrifft eine selbstschneidende Schraube, insbesondere zur Verwendung als Spanplattenschraube, mit einem Schraubenkopf mit Antriebseinrichtung, einem im wesentlichen zylindrischen Schraubenschaft, auf dem aus Gewindegängen ein eingängiges Gewinde gebildet ist, sowie einer Schraubenspitze.

Schrauben dieser Art sind in der Technik gut bekannt. Ein besonderer Vorteil ihrer Anwendung liegt darin, daß zum Einschrauben solcher Schrauben kein vorgebohrtes Führungsloch notwendig ist.

Die Spezialisierung auf einen bestimmten Anwendungsfall, hier auf eine Spanplattenschraube, ergibt im Vergleich mit sogenannten Universalschrauben, deren Eigenschaften immer einen Kompromiß für die geforderten verschiedenen Anwendungsfälle darstellen, den Vorteil, daß ihre Merkmale so gestaltet werden können, daß die Leistungen der Schraube für diesen Anwendungsfall optimiert werden können. Die Merkmale einer Schraube, welche ihre Leistungen bestimmen, sind insbesondere die Profilform, die Gewindeart, der Flankenwinkel, das Schnittiefenverhältnis und die Steigung. Die Leistungen einer Schraube, z.B. der Vorschub, der Einschraubwiderstand und die Ausreißkraft, werden wesentlich durch die Auswahl der Werte dieser Parameter beeinflußt. So erhöht eine Vergrößerung des Schnittiefenverhältnisses im allgemeinen die Ausreißkraft, während gleichzeitig (unter der Voraussetzung eines gleichbleibenden Nenndurchmessers) aufgrund des abnehmenden Kerndurchmessers die Schraubenfestigkeit sinkt. In gleicher Weise verkürzt eine Erhöhung der Steigung die Einschraubzeit, während gleichzeitig der Einschraubwiderstand ansteigt. Durch geeignete Kombinationen der Werte dieser Parameter wird versucht, die Leistungen der Schraube für bestimmte Anwendungsfälle zu optimieren, z.B. für eine Verschraubung in Spanplatten.

Die speziellen Werkstoffeigenschaften von Spanplatten (geringe Dichte, Neigung zum Zerbröseln, Rißempfindlichkeit, etc.) führt bei speziell für Spanplatten ausgelegten Schrauben zu einer charakteristischen Auswahl der Werte der oben angegebenen Parameter. Um den Einschraubwiderstand gering zu halten, wird eine geringe Gewindesteigung angestrebt. Ein geringer Einschraubwiderstand wird ferner von einem kleinen Flankenwinkel des Gewindes unterstützt. Ein kleiner Flankenwinkel erhöht ferner die Ausreißkraft der Schraube.

Diese beiden Parameter haben jedoch auch eine weitere Wirkung: Eine geringe Steigung führt beim Einschrauben der Schraube zu einem geringen Vorschub, woraus eine hohe Einschraubzeit resultiert. Für eine geringe Einschraubzeit wird daher eine eher große Gewindesteigung angestrebt. Der die Ausreißkraft positiv beeinflussende kleine Flankenwinkel führt jedoch auch zu einem scharfkantigen Übergang zwischen Gewindeflanke und Schraubenschaft. Dieser scharfkantige Übergang weist eine Reihe von Nachteilen auf: Zum einen ist er schwer herzustellen, und zum anderen bedeutet ein solcher Übergang gemäß den allgemeinen Gesetzen der Werkstoffkunde eine Schwächung des Schraubenschaftes. Ferner beeinflußt das dort stattfindende scharfkantige Einschneiden des Werkstoffes die Ausreißkraft der Schraube nachteilig.

Es ist also offensichtlich, daß sich viele der bei einer solchen Schraube gewünschten Eigenschaften widersprechen, weshalb selbst bei einer für nur einen Anwendungsfall ausgelegten Schraube die Auswahl der Werte der oben genannten Parameter einen notwendigen Kompromiß darstellt. Im stand der Technik finden sich viele Beispiele für Schrauben der eingangs angegebenen Art, bei denen versucht wird, durch spezielle Gestaltungen des Gewindes einen Teil der oben dargestellten Gegensätze zu überwinden und so bessere Leistungen der Schraube zu erzielen.

Ein solcher Versuch besteht z.B. darin, zur Erhöhung des Vorschubs anstatt eines eingängigen Gewindes ein Doppelganggewinde vorzusehen. Ein solches Gewinde bietet jedoch hinsichtlich der Probleme des scharfkantigen Übergangs zwischen Flanke und Schraubenschaft sowie hinsichtlich des Einschraubwiderstandes keine Vorteile.

Ein anderer Versuch besteht darin, anstelle des üblichen symmetrischen Gewindeprofils ein unsymmetrisches Gewindeprofil zu verwenden. Unter der Voraussetzung eines konstanten Flankenwinkels führt ein solches unsymmetrisches Gewindeprofil auf einer Flankenseite zu einem weniger scharfkantigen Übergang zum Schaft, wohingegen dieses Problem für die andere Flankenseite noch verschärft wird.

Trotz zahlreicher bekannter Schraubengestaltungen besteht deshalb immer noch ein Bedürfnis nach der Bereitstellung neuer Schraubenformen mit möglichst gutem Kompromiß von Leistungsmerkmalen.

Aufgabe der Erfindung ist somit die Schaffung einer verbesserten selbstschneidenden Schraube, insbesondere zur Verwendung als Spanplattenschraube, deren Gestaltung das Erzielen von verbesserten Leistungen hinsichtlich der Einschraubzeit, des Einschraubwiderstandes und der Ausreißkraft ermöglicht.

Diese Aufgabe wird bei einer Schraube der eingangs genannten Gattung dadurch gelöst, daß die Gewindegänge mindestens im Bereich des Schaftes ein Doppelwinkelprofil aufweisen.

Dadurch wird erreicht, daß ein Reihe wichtiger Schraubenparameter wie Einschraubzeit, Einschraubwiderstand und Ausreißkraft wesentlich flexibler als bei Gewindegängen mit normalem Einwinkelprofil, gleichgültig ob symmetrisch oder unsymmetrisch, eingestellt werden können, ohne gleichzeitig andere Parameter wesentlich zu verschlechtern.

Das Doppelwinkelprofil weist bei einer bevorzugten Ausführungsform der Erfindung schraubenspitzenseitig eine Flanke mit geradliniger Außenkontur und schraubenkopfseitig zwei zueinander stumpfwinklige Flankenabschnitte mit jeweils geradliniger Außenkontur auf, von denen der schraubenschaftseitige Flankenabschnitt mit einer zur Schraubenlängsachse senkrechten Ebene (Radialebene) einen größeren Winkel einschließt als der gewindespitzenseitige Flankenabschnitt.

Gemäß weiteren vorteilhaften Ausführungsformen der Erfindung weist das Doppelwinkelprofil einen von der schraubenspitzenseitigen Flanke und dem gewindespitzenseitigen Flankenabschnitt eingeschlossenen Flankenwinkel $\alpha$ von 30°±5°, einen von der schraubenspitzenseitigen Flanke und einer Radialebene der Schraube eingeschlossene Winkel $\beta$ von 25°±5°, einen von dem schraubenschaftseitigen Flankenabschnitt und einer Radialebene der Schraube eingeschlossenen Winkel $\gamma$ von 25°±5° und/oder einen von dem gewindespitzenseitigen Flankenabschnitt und einer Radialebene der Schraube eingeschlossene Winkel $\varepsilon$ von 5°±5° auf.

In der bevorzugten Ausführungsform sind die durch die Gewindespitze verlaufende Radialebene und die eine gemeinsame Symmetrieebene für die schraubenspitzenseitige Flanke und den schraubenschaftseitigen Flankenabschnitt bildende Radialebene gegeneinander um einen Betrag X [in mm] versetzt, der sich in Abhängigkeit von der Schnittiefe s [in mm] des Gewindes ergibt zu: $X = s \cdot (0{,}1023 \pm 0{,}07)$.

Vorzugsweise, aber nicht notwendigerweise, ist die Schraube auch im Bereich der Schraubenspitze mit Gewindegängen versehen, die entweder ebenfalls ein Doppelwinkelprofil oder aber ein Einwinkelprofil aufweisen. Ein Einwinkelprofil (symmetrisch oder unsymmetrisch) wird für den Bereich der Schraubenspitze bevorzugt. Die Gewindegänge im Bereich der Schraubenspitze weisen einen Flankenwinkel von vorzugsweise ungefähr 50° auf.

Bei weiteren bevorzugten Ausführungsformen der Erfindung weist das Gewinde ein Steigungsverhältnis P/D von 0,63±0,03 und/oder ein Schnittiefenverhältnis D/d von 1,6±0,05 auf.

Im Sinne der Erfindung beziehen sich die Begriffe "Profil" und "Außenkontur" auf das Gewindeprofil, wie es sich bei einem Längsschnitt durch die Längsachse der Schraube ergibt. "Steigungsverhältnis" ist das Verhältnis zwischen Gewindesteigung (= Ganghöhe) P und Außendurchmesser (= Nenndurchmesser) D. "Schnittiefenverhältnis" ist das Verhältnis zwischen Außendurchmesser (= Nenndurchmesser) D und Kerndurchmesser (= Schaftdurchmesser) d.

Die Erfindung wird nachfolgend unter Bezugnahme auf eine bevorzugte Ausführungsform erläutert, die in der beigefügten Zeichnung dargestellt ist. In dieser ist:

-   Fig. 1 eine Seitenansicht einer erfindungsgemäßen Schraube; und

-   Fig. 2 eine vergrößerte Ansicht eines Schnitts durch den in Fig. 1 mit A markierten Bereich.

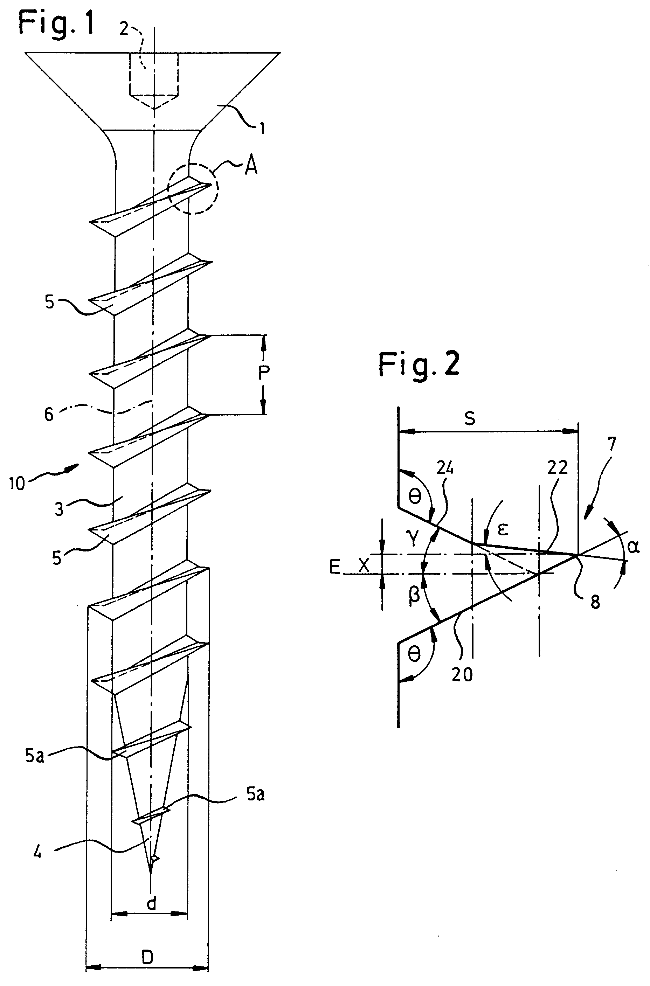

In Fig. 1 ist eine erfindungsgemäße selbstschneidende Schraube 10 dargestellt, insbesondere zur Verwendung als Spanplattenschraube, die aus einem als Senkkopf ausgebildeten Schraubenkopf 1 mit Antriebseinrichtungen 2 in Form eines Innenvielkants sowie aus einem mit Gewindegängen 5, 5a versehenen Schraubenschaft 3 und einer Schraubenspitze 4 besteht. Das von den Gewindegängen 5, 5a gebildete Gewinde ist ein eingängiges Gewinde. Im Bereich des Schraubenschaftes 3 weisen die Gewindegänge 5 ein Doppelwinkelprofil 7 auf, wie es in Fig. 2 dargestellt ist.

Im Bereich der Schraubenspitze 4 befinden sich Gewindegänge 5a, die kein Doppelwinkelprofil, sondern ein Einwinkelprofil aufweisen. Die Schraube weist einen Kerndurchmesser d und einen Nenndurchmesser D auf, die Gewindesteigung ist mit P bezeichnet, und der Flankenwinkel des Doppelwinkelprofils trägt das Bezugszeichen $\alpha$.

Das Doppelwinkelprofil weist schraubenspitzenseitig eine durchgehende Flanke 20 mit geradliniger Außenkontur auf, die mit einer zur Längsachse 6 der Schraube senkrechten Ebene (Radialebene) einen Winkel $\beta$ von ungefähr 25° einschließt. Schraubenkopfseitig weist das Doppelwinkelprofil zwei zueinander stumpfwinkligen Flankenabschnitte 22, 24 mit jeweils geradliniger Außenkontur auf, von denen der schraubenschaftseitige Flankenabschnitt 24 mit einer Radialebene der Schraube einen Winkel $\gamma$ von ungefähr 25° einschließt, während der gewindespitzenseitige Flankenabschnitt 22 mit einer Radialebene der Schraube einen Winkel $\varepsilon$ von ungefähr 5° einschließt. Daraus ergibt sich, daß die schraubenspitzenseitige Flanke 20 und der schraubenschaftseitige Flankenabschnitt 24 symmetrisch zueinander bezüglich einer Radialebene E der Schraube sind, die den Abstand zwischen dem Übergang der schraubenspitzenseitigen Flanke und dem Übergang des schraubenschaftseitigen Flankenabschnittes in den Schaft in zwei gleiche Teilstücke unterteilt. Aus den oben angegebenen Winkelwerten ergibt sich außerdem, daß bei einer bevorzugten Ausführungsform der Flankenwinkel $\alpha$ an der Gewindespitze 8 ungefähr 30° beträgt.

Durch das gewählte Doppelwinkelprofil ergeben sich eine Reihe von Vorteilen. Da die Winkel $\Theta$ am Übergang der Gewindeflanken in den Schraubenschaft denjenigen eines symmetrischen Gewindes mit einem Flankenwinkel von 50° entsprechen, ist der Übergang nicht scharfkantig, wodurch zum einen eine Schwächung der Schraube und zum anderen verhindert wird, daß das Material, in welches die Schraube eingeschraubt wird, in diesem Bereich scharfkantig geschnitten wird. Durch die zusätzliche Verpreßwirkung auf das Material durch den schraubenschaftseitigen Flankenabschnitt ergeben sich Vorteile hinsichtlich der Ausreißkraft der Schraube. Im Vergleich zu herkömmlichen Gewinden mit einem Flankenwinkel von 50° weist die erfindungsgemäße Schraube ein wesentlich vergrößertes Schnittiefenverhältnis D/d auf, wodurch die Ausreißkraft weiter positiv beeinflußt wird. Die Ausreißkraft wird schließlich durch den Winkel $\varepsilon$ positiv beeinflußt, den der gewindespitzenseitige Flankenabschnitt mit einer Radialebene einschließt. Dieser Winkel entspricht ungefähr demjenigen eines unsymmetrischen Gewindeprofils herkömmlicher Schrauben.

Ein wesentlicher Parameter bei der Gestaltung einer solchen erfindungsgemäßen Schraube ist der Abstand X zwischen der Radialebene durch die Gewindespitze 8 und der Radialebene E, die durch den Schnittpunkt der schraubenspitzenseitigen Flanke 20 mit einer gedachten geradlinigen Verlängerung des schraubenschaftseitigen Flankenabschnittes 24 führt und den Abstand zwischen dem Übergang der schraubenspitzenseitigen Flanke und dem Übergang des schraubenschaftseitigen Flankenabschnittes in den Schaft (wie bereits oben ausgeführt) in zwei gleiche Teilstücke unterteilt. Dieser Abstand X ist für den Extremfall maximal, in dem die Länge des schraubenschaftseitigen Flankenabschnittes 24 gegen 0 geht, das erfindungsgemäße Profil also zu einem herkömmlichen unsymmetrischen Profil mit einem Flankenwinkel von ungefähr 30° entartet. Dieser Abstand X wird minimal und zu 0, wenn die Länge des schraubenschaftseitigen Flankenabschnittes 24 gleich der Länge der schraubenspitzenseitigen Flanke 20 wird, das erfindungsgemäße Doppelwinkelprofil also zu einem herkömmlichen symmetrischen Schraubenprofil mit einem Flankenwinkel von ungefähr 50° entartet.

Zwischen diesen beiden Extremfällen läßt sich eine ideale Geometrie für das Flankenprofil finden, bei der die Summe der Einzelleistungen wie Ausreißkraft, Einschraubwiderstand und Werkstoffbelastung ein Maximum annimmt. Für die beschriebene Ausführungsform wurde herausgefunden, daß für den bevorzugten Abstand X in Abhängigkeit von der Schnittiefe s (mit X und s in mm) gilt: X = s · (0,1023±0,07) .

Im Hinblick auf eine kurze Einschraubzeit der Schraube ist ein Gewindesteigungsverhältnis P/D von 0,63±0,03 gewählt, das ungefähr dem 1,4-fachen des bei Spanplattenschrauben mit eingängigen Gewinden üblichen Steigungsverhältnisses von 0,40 - 0,45 beträgt. Der im Vergleich mit herkömmlichen Schrauben geringere Einschraubwiderstand des erfindungsgemäßen Doppelwinkelprofils fängt die Erhöhung des Einschraubwiderstandes aufgrund der im Vergleich mit herkömmlichen Schrauben höheren Gewindesteigung auf.

Das bei der Schraube dieser Ausführungsform gewählte Schnittiefenverhältnis D/d von ungefähr 1,6 ermöglicht, eine hohe Ausreißkraft zu erzielen, wobei gleichzeitig aufgrund des nicht scharfkantigen Übergangs der Gewindeflanken in den Schraubenschaft keine Beeinträchtigung der Schraubenfestigkeit auftritt.

Das Schraubengewinde im Bereich der Schraubenspitze weist kein Doppelwinkelprofil, sondern ein Einwinkelprofil mit einem Flankenwinkel von ungefähr 50° auf, welches zusammen mit der gegenüber herkömmlichen Schrauben um ungefähr 40% erhöhten Gewindesteigungen P ein schnelles Greifen der ersten Gewindegänge ergibt.

**Patentansprüche**

1. Selbstschneidende Schraube (10) mit einem Schraubenkopf (1) mit Antriebseinrichtung (2), einem im wesentlichen zylindrischen Schraubenschaft (3), auf dem aus Gewindegängen (5) ein eingängiges Gewinde gebildet ist, sowie einer Schraubenspitze (4), dadurch gekennzeichnet, daß die Gewindegänge (5) mindestens im Bereich des Schaftes (3) ein Doppelwinkelprofil aufweisen.

2. Schraube nach Anspruch 1, dadurch gekennzeichnet, daß das Doppelwinkelprofil (7) schraubenspitzenseitig eine durchgehende Flanke (20) mit geradliniger Außenkontur und schraubenkopfseitig zwei zueinander stumpfwinklige Flankenabschnitte (22, 24) mit jeweils geradliniger Außenkontur aufweist, von denen der schraubenschaftseitige Flankenabschnitt (24) mit einer zur Schraubenlängsachse (6) senkrechten Ebene (Radialebene) einen größeren Winkel einschließt als der gewindespitzenseitige Flankenabschnitt (22).

3. Schraube nach Anspruch 1 oder 2, dadurch gekennzeichnet, daß das Doppelwinkelprofil (7) einen von der schraubenspitzenseitigen Flanke (20) und dem gewindespitzenseitigen Flankenabschnitt (22) eingeschlossenen Flankenwinkel $\alpha$ von 30°±5° aufweist.

4. Schraube nach einem der vorhergehenden Ansprüche, dadurch gekennzeichnet, daß das Doppelwinkelprofil (7) einen von der schraubenspitzenseitigen Flanke (20) und einer Radialebene der Schraube eingeschlossenen Winkel $\beta$ von 25°±5 aufweist.

5. Schraube nach einem der vorhergehenden Ansprüche, dadurch gekennzeichnet, daß das Doppelwinkelprofil (7) einen von dem schraubenschaftseitigen Flankenabschnitt (24) und einer Radialebene der Schraube eingeschlossenen Winkel $\gamma$ von 25°±5° aufweist.

6. Schraube nach einem der vorhergehenden Ansprüche, dadurch gekennzeichnet, daß das Doppelwinkelprofil (7) einen von dem gewindespitzenseitigen Flankenabschnitt (22) und einer Radialebene der Schraube eingeschlossenen Winkel $\varepsilon$ von 5°±5° aufweist.

7. Schraube nach einem der vorhergehenden Ansprüche, dadurch gekennzeichnet, daß die von der schraubenspitzenseitigen Flanke (20) bzw. dem schraubenschaftseitigen Flankenabschnitt (24) jeweils mit einer Radialebene der Schraube eingeschlossenen Winkel $\beta$ bzw. $\gamma$ gleich sind.

8. Schraube nach Anspruch 7, dadurch gekennzeichnet, daß die durch die Gewindespitze (8) verlaufende Radialebene und die eine gemeinsame Symmetrieebene für die schraubenspitzenseitige Flanke (20) und den schraubenschaftseitigen Flankenabschnitt (24) bildende Radialebene gegeneinander um einen Betrag X [in mm] versetzt sind, der sich in Abhängigkeit von der Schnittiefe s [in mm] des Gewindes ergibt zu:

$$X = s \cdot (0{,}1023 \pm 0{,}07).$$

9. Schraube nach einem der vorhergehenden Ansprüche, dadurch gekennzeichnet, daß sie auch im Bereich der Schraubenspitze (4) mit Gewindegängen (5a) versehen ist.

10. Schraube nach Anspruch 9, dadurch gekennzeichnet, daß die Gewindegänge (5a) im Bereich der Schraubenspitze (4) ein Einwinkelprofil aufweisen.

11. Schraube nach Anspruch 9 oder 10, dadurch gekennzeichnet, daß die Gewindegänge (5a) im Bereich der Schraubenspitze (4) einen Flankenwinkel von ungefähr 50° aufweisen.

12. Schraube nach einem der vorhergehenden Ansprüche, dadurch gekennzeichnet, daß das Gewinde ein Steigungsverhältnis P/D von 0,63±0,03 aufweist.

13. Schraube nach einem der vorhergehenden Ansprüche, dadurch gekennzeichnet, daß das Gewinde ein Schnittiefenverhältnis D/d von 1,6±0,05 aufweist.

Fig. 1

Fig. 2